# EUROPÄISCHE PATENTSCHRIFT

(11) **EP 1 904 341 B1**
(45) Veröffentlichungstag und Bekanntmachung des Hinweises auf die Patenterteilung: **20.08.2008**
(21) Anmeldenummer: 06763344.6
(22) Anmeldetag: 30.05.2006
(51) Int. Cl.: B60Q 1/34, B60K 31/00, B60Q 1/14

(54) **BLINKSCHALTER FÜR EIN KRAFTFAHRZEUG, DAS EINEN ADAPTIVEN GESCHWINDIGKEITSREGLER AUFWEIST**
INDICATOR SWITCH FOR A MOTOR VEHICLE, COMPRISING AN ADAPTIVE SPEED REGULATOR
COMMUTATEUR DE CLIGNOTANT POUR VEHICULE PRESENTANT UN REGULATEUR DE VITESSE ADAPTATIF

(30) Priorität: 14.07.2005 DE 102005032847
(43) Veröffentlichungstag der Anmeldung: 02.04.2008
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2006/062687
(87) Internationale Veröffentlichungsnummer: WO 2007/006607

(56) Entgegenhaltungen:
- EP-A- 0 876 935
- EP-A- 1 331 134
- DE-A1- 4 338 098
- DE-A1- 10 114 187
- US-A- 5 400 864
- US-A- 5 567 992
- US-A1- 2004 020 698

## Beschreibung

### Stand der Technik

Die Erfindung betrifft einen Blinkschalter für ein Kraftfahrzeug, das einen adaptiven Geschwindigkeitsregler aufweist.

Adaptive Geschwindigkeitsregler, auch als ACC-Systeme (Adaptive Cruise Control) bezeichnet, dienen in Kraftfahrzeugen dazu, die Geschwindigkeit automatisch auf eine vom Fahrer gewählte Wunschgeschwindigkeit zu regeln, sofern die Fahrbahn frei ist, oder, falls sich ein langsameres vorausfahrendes Fahrzeug auf der eigenen Spur befindet, die Geschwindigkeit automatisch an die des vorausfahrenden Fahrzeugs anzupassen. Das vorausfahrende Fahrzeug wird zu diesem Zweck beispielsweise mit Hilfe eines Radarsensors geortet. Auf der Grundlage der mit Hilfe des Radarsensors gemessenen Abstands- und Relativgeschwindigkeitsdaten berechnet der Geschwindigkeitsregler dann eine geeignete positive oder negative Sollbeschleunigung, um die eigene Geschwindigkeit in komfortabler Weise an die des vorausfahrenden Fahrzeugs anzupassen oder, wenn das vorausfahrende Fahrzeug die eigene Spur verlassen hat, wieder auf die Wunschgeschwindigkeit zu beschleunigen. Diese berechnete Sollbeschleunigung wird dann durch einen entsprechenden Eingriff in das Antriebs- und/oder Bremssystem des Fahrzeugs umgesetzt, so daß der Fahrer, beispielsweise bei Fahrten auf einer Autobahn, das Gaspedal normalerweise nicht zu betätigen braucht.

Wenn sich der Fahrer jedoch dazu entschließt, das bisher verfolgte langsamere Fahrzeug zu überholen, so ist im allgemeinen eine vorübergehende Beschleunigung des eigenen Fahrzeugs erforderlich, damit das Einfädeln in den Verkehr auf der Überholspur erleichtert wird. Zu diesem Zweck kann der Fahrer durch Betätigung des Gaspedals den Geschwindigkeitsregler vorübergehend übersteuern.

Aus der gattungsgemäßen 101 14 187 ist ein Geschwindigkeitsregler bekannt, bei dem, wenn der Fahrer einen Spurwechsel beabsichtigt, der Empfindlichkeitsbereich des Radarsensors vorübergehend auf die betreffende Nebenspur erweitert wird, so daß die Geschwindigkeiten der auf dieser Nebenspur fahrenden Fahrzeuge in die Auswertung mit einbezogen werden und somit das Beschleunigungs- oder Verzögerungsverhalten automatisch an den Verkehr auf der Nebenspur angepaßt werden kann. Auf diese Weise wird zwar der Fahrkomfort weiter erhöht, doch erweist es sich oft als schwierig, das Beschleunigungs-oder Verzögerungsverhalten korrekt an die jeweilige Verkehrssituation anzupassen, zumal bei herkömmlichen ACC-Systemen in der Regel kein Rückraumradar vorhanden ist, und somit Fahrzeuge, die sich von hinten schnell auf der Überholspur annähern, bei der automatischen Regelung nicht angemessen berücksichtigt werden können.

Die Spurwechselabsicht des Fahrers wird bei dem bekannten System daran erkannt, daß der Fahrer vor dem Spurwechsel den Fahrtrichtungsanzeiger (Blinker) betätigt. In dem Zusammenhang ist auch bereits vorgeschlagen worden, in Kombination mit dem Blinkschalter einen speziellen Schalter vorzusehen, mit dem der Fahrer dem Geschwindigkeitsregler einen Überholwunsch signalisieren kann, ohne daß bereits der Blinker betätigt wird.

Der Blinkschalter eines Kraftfahrzeugs weist üblicherweise eine Ausschaltposition und zwei Einschaltpositionen auf, in denen entweder der linke oder der rechte Blinker eingeschaltet ist. Häufig ist jede Einschaltposition weiter unterteilt in eine Taststufe für kurzzeitiges Blinken und eine Schaltstufe, in der der Blinkschalter einrastet, so daß der betreffende Blinker so lange eingeschaltet bleibt, bis das Lenkrad nach einem deutlichen Lenkeinschlag wieder in die Neutralstellung zurückgestellt wird, wodurch automatisch der Blinkschalter wieder freigegeben wird. Zwischen der Taststufe und der Schaltstufe spürt der Fahrer dabei einen gewissen Druckpunkt.

Wenn nun zusätzlich eine Schaltfunktion realisiert werden soll, mit der der Fahrer dem Geschwindigkeitsregler seinen Überholwunsch signalisieren kann, bevor der Blinker aktiviert wird, so müßte die entsprechende Schaltstufe zweckmäßig zwischen der Ausschaltposition und der Taststufe der Einschaltposition liegen. Um die verschiedenen Positionen hinreichend deutlich unterscheidbar zu machen, müßte ein zweiter Druckpunkt vorgesehen werden, was jedoch leicht zu Fehlbedienungen führen kann und/oder bei der normalen Betätigung des Blinkers zur Anzeige einer Abbiegeabsicht als störend empfunden wird.

### Vorteile der Erfindung

Die Erfindung mit den in Anspruch 1 angegebenen Merkmalen bietet dem Fahrer die vorteilhafte Möglichkeit, bei einem beabsichtigten Spurwechsel mit Hilfe des Blinkschalters einen manuellen Beschleunigungs- oder Verzögerungsbefehl einzugeben. Da der Fahrer vor einem Spurwechsel ohnehin den Blinkschalter betätigen muß, erweist sich diese Lösung als ausgesprochen komfortabel und ergonomisch.

Da die Befehlsposition für die manuelle Eingabe des Beschleunigungs- oder Verzögerungsbefehls am Blinkschalter jenseits der Einschaltposition liegt, wird die normale Funktion des Blinkschalters beim Setzen des Fahrtrichtungsanzeigers nicht gestört. Erst wenn der Fahrer den Blinkschalter über die Einschaltposition hinaus bewegt, wird die Beschleunigung oder Verzögerung des Fahrzeugs bewirkt. Dabei kann der Fahrer mit Hilfe des Blinkschalters auch die Dauer dieser Beschleunigungs- oder Verzögerungsphase manuell steuern und so das Beschleunigungs- oder Verzögerungsverhalten optimal an die jeweilige Verkehrssituation anpassen, ohne daß er mit dem Fuß das Gaspedal oder das Bremspedal betätigen muß.

Vorteilhafte Ausgestaltungen und Weiterbildungen ergeben sich aus den Unteransprüchen.

Bevorzugt weist der Blinkschalter zwei zusätzliche Befehlspositonen auf, nämlich eine Befehlsposition zum Beschleunigen, die in Ländern mit Rechtsverkehr jenseits der Einschaltposition für den linken Blinker liegt, und eine Befehlsposition zum Verzögern, die jenseits der Einschaltposition für den rechten Blinker liegt. In Ländern mit Linksverkehr ist es entsprechend umgekehrt. Eine Umschaltung kann z.B. über das Navigationssystem automatisch erfolgen.

Die Möglichkeit, das Fahrzeug bei einem Spurwechsel nach rechts, also auf die langsamere Spur, manuell zu verzögern, erweist sich als besonders vorteilhaft, weil in solchen Situationen der Radarsensor und das ACC-System eine verhältnismäßig lange Zeit benötigen, bis das langsamere Fahrzeug, beispielsweise ein Lkw, auf der rechten Nebenspur als neues Zielobjekt erfaßt und angemessen ausgewertet ist. Wenn der Fahrer nicht rechtzeitig eingreift, wird dabei der Sicherheitsabstand zu dem langsameren Fahrzeug oft erheblich unterschritten. Die Notwendigkeit, in solchen Situationen durch Betätigung des Bremspedals in die Regelung einzugreifen, mindert die Akzeptanz des ACC-Systems und kann auch zu Gefahrensituationen führen, wenn der Fahrer zu spät bemerkt, daß er das Bremspedal betätigen muß. Außerdem wird durch die Betätigung des Bremspedals das ACC-System deaktiviert, so daß der Fahrer das System danach wieder neu aktivieren muß, was als lästig empfunden wird.

Bei der erfindungsgemäßen Lösung kann der Fahrer dagegen die nötige Verzögerung sehr leicht und bequem erreichen, indem er einfach den Blinkschalter etwas weiter nach rechts verschwenkt. Für diese Lösung ist eine wesentlich größere Akzeptanz zu erwarten, da das Konzept "Fahren ohne Fußpedalbetätigung" nicht durchbrochen wird und auch die mit der Bremspedalbetätigung verbundene Deaktivierung des ACC-Systems vermieden wird.

Bevorzugt ist der Blinkschalter bezüglich der zusätzlichen Befehlspositionen als Taster ausgebildet, d.h., er kehrt automatisch wieder in die zugehörige Einschaltposition zurück, sobald der Hebel losgelassen wird.

Gemäß einer Weiterbildung kann dem Blinkschalter in den Befehlspositionen jeweils auch ein Weggeber oder ein Kraftsensor zugeordnet sein, so daß sich die Stärke der Beschleunigung bzw. Verzögerung über das Ausmaß der Auslenkung des Blinkhebels oder die Stärke der Betätigungskraft nach Bedarf steuern läßt.

Alternativ kann die Beschleunigung über die Dauer der Aktivierung erhöht/vermindert werden (integrales Verhalten). Dies ist vorteilhaft, da keine zusätzlichen Sensoren benötigt werden.

### Zeichnung

Ausführungsbeispiele der Erfindung sind in den Zeichnungen dargestellt und in der nachfolgenden Beschreibung näher erläutert.

Es zeigen:
Figur 1 eine Prinzipskizze eines erfindungsgemäßen Blinkschalters;
Figur 2 eine vergrößerte schematische Darstellung eines Positionssensors für den Blinkschalter nach Figur 1; und
Figur 3 einen Positionssensor und Kraftsensoren für einen Blinkschalter gemäß einer anderen Ausführungsform

### Beschreibung des Ausführungsbeispiels

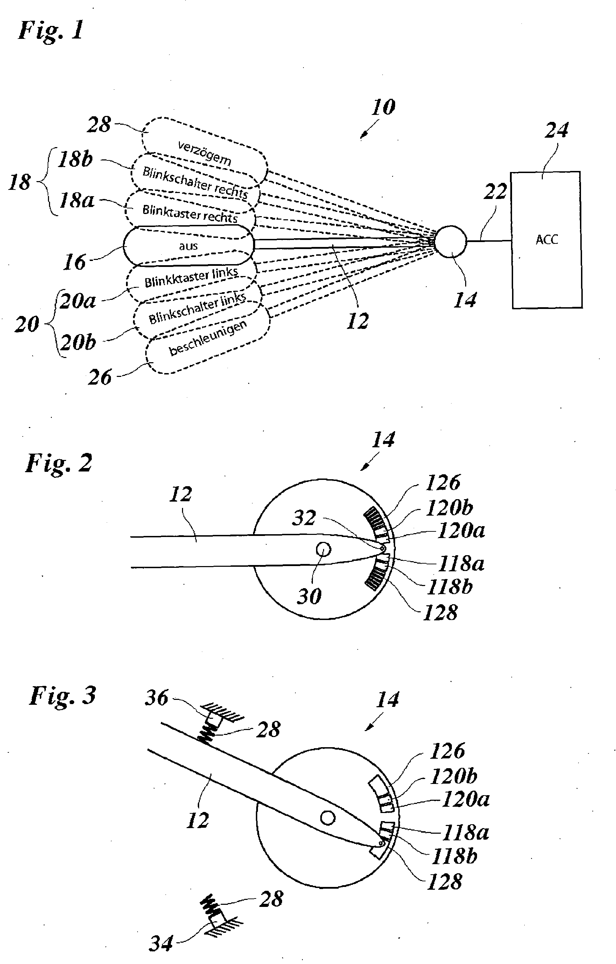

In Figur 1 ist schematisch ein Blinkschalter 10 gezeigt, der wie üblich durch einen Hebel 12, einen zugehörigen Positionssensor 14 sowie eine im Prinzip bekannte, hier nicht gezeigte Rast- und Rückstellmechanik aufweist. Der Hebel 12 ist so an einer nicht gezeigten Lenksäule angeordnet, daß er seitlich, im gezeigten Beispiel nach links, von der Lenksäule absteht. Durch Verschwenken des Hebels 12 nach oben, also im gleichen Drehsinn wie bei einer Drehung des Lenkrads nach rechts, wird der rechte Blinker des Fahrzeugs eingeschaltet, und durch Verschwenken nach unten wird entsprechend der linke Blinker eingeschaltet.

Der Blinkschalter weist demgemäß eine Ausschaltposition 16 auf, die in Figur 1 in durchgezogenen Linien dargestellt ist, sowie zwei gestrichelt eingezeichnete Einschaltpositionen 18, 20 für den rechten bzw. linken Blinker. Jede Einschaltposition ist ihrerseits unterteilt in eine Taststufe 18a bzw. 20a und eine Schaltstufe 18b bzw. 20b. In der Taststufe ist der Hebel 12 elastisch in Richtung auf die Ausschaltposition 16 vorgespannt, und der Blinker bleibt nur so lange eingeschaltet, wie der Benutzer den Hebel entgegen der elastischen Rückstellkraft in der betreffenden Position hält. Wird der Hebel 12 dagegen über die Taststufe hinaus in die Schaltstufe 18b oder 20b verschwenkt, so rastet der Hebel in der betreffenden Position ein, und der Blinker bleibt eingeschaltet, bis der Hebel 12 vom Benutzer manuell zurückgestellt oder durch einen mit der Lenkradbewegung gekoppelten Mechanismus automatisch entriegelt wird, so daß er in die Ausschaltposition zurückkehrt.

Die Positionen des Hebels 12 werden vom Positionssensor 14 erfaßt und in elektronische Signale umgewandelt, die in bekannter Weise an die Blinkrelais des Fahrzeugs übermittelt werden. Außerdem ist der Positionssensor hier über eine mehradrige Leitung oder vorzugsweise über einen fahrzeugeigenen Datenbus 22 (z.B. CAN-Bus) mit einem adaptiven Geschwindigkeitsregler (ACC) 24 verbunden. Der Aufbau des Geschwindigkeitsreglers 24 ist als solcher bekannt und wird hier nicht näher beschrieben. Lediglich die Wirkungsweise wird kurz erläutert.

Wenn der Geschwindigkeitsregler aktiviert und die eigene Fahrspur vor dem Fahrzeug frei ist, wird durch den Geschwindigkeitsregler 24 die Fahrgeschwindigkeit des Fahrzeugs auf eine vom Fahrer gewählte Wunschgeschwindigkeit geregelt. Wenn durch einen nicht gezeigten Radarsensor ein langsameres vorausfahrendes Fahrzeug auf der eigenen Spur geortet wird, so greift der Geschwindigkeitsregler 22 so in das Antriebssystem und erforderlichenfalls auch in das Bremssystem des Fahrzeugs ein, das die Geschwindigkeit des eigenen Fahrzeugs in komfortabler Weise, mit geeignet begrenzten Beschleunigungen und Verzögerungen, an die Geschwindigkeit des vorausfahrenden Fahrzeugs angepaßt wird und das vorausfahrende Fahrzeug in einem angemessenen (geschwindigkeitsabhängigen) Sicherheitsabstand verfolgt wird. Die vom Positionssensor 14 an den Geschwindigkeitsregler 24 übermittelten Signale können in bekannter Weise dazu dienen, dem Geschwindigkeitsregler eine Spurwechselabsicht des Fahrers mitzuteilen, so daß z.B. der Ortungsbereich des Radarsensors vorübergehend auf die Nebenspur erweitert werden kann, auf die der Fahrer zu wechseln beabsichtigt.

Der Blinkschalter 10 weist, von der Ausschaltposition 16 aus gesehen jenseits der Einschaltposition 20 für den linken Blinker, eine Befehlsposition 26 auf, in der ein Beschleunigungsbefehl an den Geschwindigkeitsregler 24 übermittelt wird. Durch den in dieser Weise manuell über den Blinkschalter 10 vom Fahrer eingegebenen Beschleunigungsbefehl wird die normale Regelfunktion des Geschwindigkeitsreglers 24 übersteuert und eine Beschleunigung des Fahrzeugs veranlaßt, die über die im Regler eingestellte normale Sollbeschleunigung hinaus geht. Die Funktion des Blinkschalters 10 in der Befehlsposition 26 ist insoweit der Funktion eines herkömmlichen Bedienungshebels eines Tempomaten oder ACC-Systems vergleichbar, mit dem ebenfalls manuell eine Beschleunigung des Fahrzeugs veranlaßt werden kann. Allerdings führt der über die Befehlsposition 26 eingegebene Beschleunigungsbefehl vorzugsweise zu einer stärkeren Beschleunigung des Fahrzeugs.

Die Befehlsposition 26 hat vor allem den folgenden Zweck. Wenn der Fahrer beabsichtigt, nach links auf die Überholspur zu wechseln, um ein langsameres Fahrzeug zu überholen, so wird er wie üblich den linken Blinker betätigen. Falls der Fahrer nun beispielsweise im Rückspiegel erkennt, daß sich auf der Überholspur von hinten rasch ein schnelleres Fahrzeug annähert, so braucht er nur den Hebel 12 weiter nach unten zu bewegen, um eine zügige Beschleunigung des eigenen Fahrzeugs zu bewirken und so seine Geschwindigkeit schneller an die des Verkehrs auf der Überholspur anzupassen.

In der Befehlsposition 26 arbeitet der Hebel 12 vorzugsweise als Taster, d.h., der Hebel ist elastisch in die Schaltstufe 20b vorgespannt, und der Beschleunigungsbefehl wird nur so lange ausgegeben, wie der Fahrer den Hebel 12 in der Befehlsposition 26 hält. Wenn der Fahrer den Hebel 12 losläßt, kehrt der Geschwindigkeitsregler 24, vorzugsweise mit sanften Übergängen, wieder zur normalen Abstands- oder Geschwindigkeitsregelung zurück.

Wahlweise kann der Geschwindigkeitsregler 24 auch so arbeiten, daß, solange der Beschleunigungsbefehl aktiv ist, zu der im normalen Regelmodus berechneten abstandsabhängigen Sollbeschleunigung ein bestimmter positiver Wert addiert wird, der für die zusätzliche Beschleunigung sorgt. Der Beschleunigungsbefehl wird dann von der normalen Regelfunktion überlagert, mit der Folge, daß bei zu starker Annäherung an ein vorausfahrendes Fahrzeug auf der Überholspur automatisch die Beschleunigung wieder verringert oder ganz unterdrückt oder ins Gegenteil verkehrt wird, so daß ein zu dichtes Auffahren auf das vordere Fahrzeug automatisch verhindert wird.

Wahlweise kann das vom Positionssensor 14 in der Befehlsposition 26 ausgegebene Signal auch bewirken, daß die Verrastung für den Hebel 12 in der Schaltstufe 20b unwirksam geschaltet wird (ähnlich wie bei einer Rückkehr des Lenkrads in die Neutralstellung), so daß der Hebel 12, wenn er in der Befehlsposition 26 losgelassen wird, gleich in die Ausschaltposition 16 zurückkehrt.

Die Bewegung des Hebels 12 aus der Ausschaltposition 16 in die Befehlsposition 26 kann beispielsweise wie folgt ablaufen. Wenn der Benutzer den Hebel aus der Ausschaltposition 16 nach unten schwenkt, so hat er zunächst eine leichte Rückstellkraft zu überwinden, während sich der Hebel im Bereich der Taststufe 20a befindet. Bei Annäherung an die Schaltstufe 20b rastet der Hebel dann selbsttätig ein und bewegt sich dabei geringfügig vom Finger des Benutzers weg, so daß der Benutzer keine Kraft mehr aufzuwenden braucht, um den Hebel ganz in die Schaltstufe 20b zu bringen. Deshalb besteht praktisch keine Gefahr, daß der Benutzer den Hebel versehentlich in die Befehlsposition 26 bringt, wenn er lediglich den Blinker betätigen will, um etwa eine Abbiegeabsicht anzuzeigen. Nur wenn der Benutzer den Hebel aktiv über die Schaltstufe 20b hinaus nach unten verschwenkt und dabei den in der Schaltstufe wirkenden Rastwiderstand überwindet, wird die Beschleunigung des Fahrzeugs ausgelöst.

Im gezeigten Beispiel weist der Blinkschalter 10 jenseits der Schaltstufe 18b für den rechten Blinker eine weitere Befehlsposition 28 auf, in der ein Verzögerungsbefehl an den Geschwindigkeitsregler 24 ausgegeben wird. Diese Funktion bietet dem Fahrer die komfortable Möglichkeit, bei einem Spurwechsel auf die langsamere rechte Spur vorbeugend die Geschwindigkeit zu reduzieren, so daß bereits eine Geschwindigkeitsanpassung erfolgen kann, bevor die Abstandsregelung auf der rechten Spur aktiv wird. Die Verzögerung des Fahrzeugs kann dabei je nach Betrag der durch den Verzögerungsbefehl angeforderten Verzögerung sowohl durch Eingriff in das Antriebssystem als auch durch Eingriff in das Bremssystem erfolgen.

Wesentlich ist dabei, daß der Fahrer mit Hilfe der Befehlsposition 28 das Fahrzeug aktiv bremsen kann, ohne das Bremspedal zu betätigen. Neben einer Steigerung des Komforts hat dies vor allem den Vorteil, daß die Funktion des Geschwindigkeitsreglers 24 aktiv bleibt, während bei Betätigung des Bremspedals der Geschwindigkeitsregler (wie allgemein üblich) abgeschaltet würde und dann mühsam wieder von Hand aktiviert werden müßte.

Für die Bewegung des Hebels 12 aus der Ausschaltposition 16 in die Befehlsposition 28 und für die Rückkehr in die Ausschaltposition gilt das oben für die Befehlsposition 26 Gesagte analog.

Bei der oben beschriebenen Ausführungsform handelt es sich bei dem in der Befehlsposition 26 oder 28 ausgegebenen Signal einfach um ein logisches Signal, das im Geschwindigkeitsregler 24 bewirkt, daß eine positive oder negative, ggf. geschwindigkeitsabhängige Sollbeschleunigung eingestellt wird oder ein entsprechender Beschleunigungswert zu der im Rahmen der normalen Abstandsregelung berechneten Sollbeschleunigung addiert wird.

Figur 2 zeigt eine Ausführungsform des Positionssensors 14, die es dem Fahrer ermöglicht, mit Hilfe des Hebels 12 in der Befehlsposition 26 oder 28 auch die Stärke der Beschleunigung bzw. Verzögerung zu bestimmen. Die Darstellung in Figur 2 ist dabei stark schematisiert und soll lediglich das Prinzip verdeutlichen. Der Hebel 12 ist im Positionssensor 14 um eine Achse 30 schwenkbar gelagert und weist in einem überstehenden Endabschnitt einen Schleifkontakt 32 auf. Dieser Schleifkontakt 32 wirkt mit Gegenkontakten 118a, 118b, 120a, 120b, 126 und 128 zusammen, die auf einem Kreisbogen um die Achse 30 herum angeordnet sind. Die Gegenkontakte 118a und 120a entsprechen den Taststufen 18a und 20a, während die Gegenkontakte 118b und 120b den Schaltstufen 18b und 20b entsprechen. Die Gegenkontakte 126 entsprechen der Befehlsposition 26 und bilden eine Gruppe aus mehreren Kontaktfeldern, die zur Erzeugung eines mehrwertigen Signals dienen, das nach Art eines Weggebers die Winkelstellung des Hebels 12 in der Befehlsposition 26 angibt. Auf diese Weise kann der Fahrer die Stärke der gewünschten Beschleunigung bestimmen, indem er den Hebel 12 im Bereich der Befehlsposition 26 gegen die Kraft einer nicht gezeigten Rückstellfeder mehr oder weniger weit nach unten verschwenkt. Entsprechend bilden die Gegenkontakte 128 einen Weggeber, mit dem sich die Stärke des Verzögerungsbefehls in der Befehlsposition 28 wählen läßt.

Figur 3 illustriert ein abgewandeltes Ausführungsbeispiel, bei dem ebenfalls ein mehrwertiger Beschleunigungs- oder Verzögerungsbefehl eingegeben werden kann. Die Gegenkontakte 126 und 128 erzeugen hier zwar nur ein logisches Signal, das angibt, daß sich der Hebel 12 in der Befehlsposition 26 bzw. 28 befindet, doch wird hier zusätzlich mit Kraftsensoren 34, 36 die Kraft gemessen, mit der der Fahrer den Hebel 12 in der Befehlsposition 26 nach unten bzw. in der Befehlsposition 28 nach oben drückt. Der Hebel wird dabei vom Fahrer jeweils gegen eine schematisch dargestellte Rückstellfeder 38 angedrückt, die sich über den betreffenden Kraftsensor an einem festen Widerlager abstützt.

## Patentansprüche

1. Blinkschalter für ein Kraftfahrzeug, das einen adaptiven Geschwindigkeitsregler (24) aufweist, **dadurch gekennzeichnet, daß** der Blinkschalter (10) zusätzlich zu einer Ausschaltposition (16) und einer Einschaltposition (18, 20) mindestens eine jenseits der Einschaltposition liegende Befehlsposition (26, 28) aufweist, in der er einen Befehl zum Modifizieren der Sollbeschleunigung an den Geschwindigkeitsregler (24) ausgibt.

2. Blinkschalter nach Anspruch 1, **dadurch gekennzeichnet, daß** er jenseits einer ersten Einschaltposition (20) eine erste Befehlsposition (26) zur Ausgabe eines Beschleunigungsbefehls und jenseits einer zweiten Einschaltposition (18) eine zweite Befehlsposition (28) zur Ausgabe eines Verzögerungsbefehls aufweist.

3. Blinkschalter nach Anspruch 1 oder 2, **dadurch gekennzeichnet, daß** er in der Befehlsposition (26, 28) als Taster arbeitet.

4. Blinkschalter nach einem der vorstehenden Ansprüche, **dadurch gekennzeichnet, daß** er dazu ausgebildet ist, ein mehrwertiges Befehlsssignal auszugeben, dessen Wert die Stärke der Modifikation der Sollbeschleunigung angibt.

5. Blinkschalter nach Anspruch 4, **gekennzeichnet durch** einen integrierten Weggeber (126, 128) zur Erzeugung des mehrwertigen Befehlssignals.

6. Blinkschalter nach Anspruch 4, **gekennzeichnet durch** einen integrierten Kraftsensor (34, 36) zur Erzeugung des mehrwertigen Befehlssignals.

7. Blinkschalter nach den Ansprüchen 3 und 4, **gekennzeichnet durch** eine Einrichtung zur Erzeugung des mehrwertigen Befehlssignals in Abhängigkeit von der Dauer der Tasterbetätigung.

## Claims

1. Indicator switch for a motor vehicle which has an adaptive cruise controller (24), **characterized in that** the indicator switch (10) has, in addition to a switch-off position (16) and a switch-on position (18, 20), at least one instruction position (26, 28) which is located beyond the switch-on position and in which it outputs an instruction to modify the setpoint acceleration to the cruise controller (24).

2. Indicator switch according to Claim 1, **characterized in that** beyond a first switch-on position (20) said indicator switch has a first instruction position (26) for outputting an acceleration instruction, and beyond a second switch-on position (18) said indicator switch has a second instruction position (28) for outputting a deceleration instruction.

3. Indicator switch according to Claim 1 or 2, **characterized in that** said indicator switch operates as a momentary-contact control in the instruction position (26, 28).

4. Indicator switch according to one of the preceding claims, **characterized in that** it is designed to output a multi-value instruction signal whose value indicates the magnitude of the modification of the setpoint acceleration.

5. Indicator switch according to Claim 4, **characterized by** an integrated travel sensor (126, 128) for generating the multi-value instruction signal.

6. Indicator switch according to Claim 4, **characterized by** an integrated force sensor (34, 36) for generating the multi-value instruction signal.

7. Indicator switch according to Claims 3 and 4, **characterized by** a device for generating the multi-value instruction signal as a function of the duration of the activation of the momentary-contact control.

## Revendications

1. °) Commutateur de clignotant de véhicule automobile comportant un régulateur adaptatif de vitesse (24),
**caractérisé en ce que**
le commutateur de clignotant (10) comporte en plus d'une position de coupure (16) et d'une position de branchement (18, 20), au moins une position de commande (26, 28) située de l'autre côté de la position de branchement et pour laquelle il envoie un ordre pour modifier l'accélération de consigne à destination du régulateur de vitesse (24).

2. °) Commutateur de clignotant selon la revendication 1,
**caractérisé en ce que**
de l'autre côté d'une première position de branchement (20), il y a une première position de commande (26) pour émettre un ordre d'accélération et de l'autre côté d'une seconde position de branchement (18), il y a une seconde position de commande (28) pour émettre un ordre de décélération.

3. °) Commutateur de clignotant selon la revendication 1 ou 2,
**caractérisé en ce que**
dans la position de commande (26, 28), il fonctionne comme un détecteur.

4. °) Commutateur de clignotant selon l'une des revendications précédentes,
**caractérisé en ce qu'**
il est en outre réalisé pour émettre un signal de commande à plusieurs niveaux dont le niveau indique l'intensité de la modification de l'accélération de consigne.

5. °) Commutateur de clignotant selon la revendication 4,
**caractérisé par**
un autre capteur de course (126, 128), intégré pour générer un signal de commande à plusieurs niveaux.

6. °) Commutateur de clignotant selon la revendication 4,
**caractérisé par**
un capteur de force (34, 36) intégré, pour générer le signal de commande à plusieurs niveaux.

7. °) Commutateur de clignotant selon les revendications 3 et 4,
**caractérisé par**
une installation pour générer le signal de commande à plusieurs niveaux en fonction de la durée de l'actionnement du commutateur.
